# EUROPEAN PATENT SPECIFICATION

(11) **EP 3 013 100 B1**
(45) Date of publication and mention of the grant of the patent: **29.08.2018**
(21) Application number: 15190579.1
(22) Date of filing: 20.10.2015
(51) Int. Cl.: H04W 48/10, H04W 48/12, H04W 84/12

(54) **METHOD AND DEVICE FOR RELEASING SSID IN WLAN**
VERFAHREN UND VORRICHTUNG ZUR SSID-FREISETZUNG IN EINEM WLAN
PROCÉDÉ ET DISPOSITIF PERMETTANT DE LIBÉRER UN SSID DANS UN WLAN

(30) Priority: 22.10.2014 CN 201410570720
(43) Date of publication of application: 27.04.2016
(73) Proprietor: Xiaomi Inc., Beijing 100085 (CN)
(72) Inventor: Zhang, Pengfei, Haidian District Beijing 100085 (CN); Wang, Yidong, Haidian District Beijing 100085 (CN); Peng, Chuan, Haidian District Beijing 100085 (CN)
(74) Representative: Robson, Aidan John

(56) References cited:
- US-A1- 2013 201 980
- US-B1- 8 228 215
- US-B2- 8 060 521
- David A. Westcott ET AL: "Wireless Lan Topologies" In: "Certified Wireless Network Administrator Official Study Guide", 10 September 2014 (2014-09-10), John Wiley & Sons, Incorporated, XP055339198, ISBN: 978-1-118-89370-8 pages 237-262,

## Description

### TECHNICAL FIELD

The present disclosure generally relates to the field of communication technology, and more particularly, to a method and a device for releasing an SSID in a WLAN (Wireless Local Area Network).

### BACKGROUND

A WLAN may be divided into multiple sub-networks, which need different identification authentications, by using SSID (Service Set Identifier) technology. Each of the sub-networks needs an independent identification authentication, and only users who pass the identification authentication may join in corresponding sub-networks. The network virtually isolated in such way may prevent unauthorized users from joining in the network. In related art, a communications device in the network broadcasts an SSID, and after a terminal device receives the SSID, the terminal device displays the SSID as a network name in a network list. US 2013/201980 A1 describes a solution to display SSID encoded in an encoding form suited for non-English languages, and especially for Chinese languages, on WLAN client devices running the Android™ operating system.

### SUMMARY

The invention relates to a method operated in a communication device according to claim 1, to a device according to claim 5, to an alternative device according to claim 8 and to a computer program product according to claim 9. Further embodiments are defined in the dependent claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1 is a flow chart of a method for releasing an SSID in a WLAN according to an exemplary embodiment;
Fig.2 is a flow chart of another method for releasing an SSID in a WLAN according to an exemplary embodiment;
Fig.3 is a flow chart of another method for releasing an SSID in a WLAN according to an exemplary embodiment;
Fig.4 is a flow chart of a method for releasing an SSID in a WLAN according to a first exemplary embodiment;
Fig.5 is a block diagram of a device for releasing an SSID in a WLAN according to an exemplary embodiment;
Fig.6 is a block diagram of another device for releasing an SSID in a WLAN according to still another exemplary embodiment; and
Fig.7 is a block diagram of another device for releasing an SSID in a WLAN according to an exemplary embodiment.

### DETAILED DESCRIPTION

The embodiments and/or examples of the following description which are not covered by the appended claims are considered as not being part of the present invention. Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

Currently, a set SSID typically consists of letters and numbers, and users tend to use a default name as an SSID, such as D-Link, Linksys, DD-WRT, thereby there may be many networks with a same name in a single area. Therefore, some users use Chinese character(s) to set an SSID, so as to reduce a probability that networks in a single area have a same name. However, when an SSID containing Chinese character(s) is displayed in the terminal device, there may be messy code in the displayed SSID.

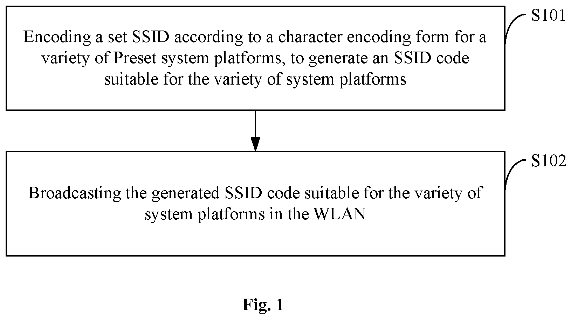

Fig.1 is a flow chart of a method for releasing an SSID in a WLAN according to an exemplary embodiment. As shown in Fig.1, the method for releasing an SSID in a WLAN, which is applied to a communication device such as a router, a wireless access point and a wireless controller, includes the following steps S101-S102.

In step S101, a set SSID is encoded according to a character encoding form for a variety of preset system platforms, to generate an SSID code suitable for the variety of system platforms.

In step S102, the generated SSID code suitable for the variety of system platforms is broadcasted in the WLAN.

In an embodiment, the variety of preset system platforms include a Windows system platform and a system platform utilizing a universal character encoding form. For example, a terminal device available from Microsoft corporation utilizes a character encoding form of the Windows system platform, and other Android system platform and Apple system platform utilize the universal character encoding form.

The above step S101 may include: encoding the SSID respectively by utilizing the character encoding form of the Windows system platform and the universal character encoding form, to generate a first SSID code and a second SSID code. Wherein, the first SSID code is suitable for the Windows system platform, and the second SSID code is suitable for the system platform utilizing the universal character encoding form, that is, the second SSID code is suitable for the Apple system platform and the Android system platform.

In the above step S102, the first SSID code and the second SSID code are broadcasted in the WLAN. The terminal device receives the first SSID code and the second SSID code for display. When the terminal device utilizes the Windows system platform, the first SSID code may be properly displayed, and when the terminal device utilizes the Apple system platform or the Android system platform, the second SSID code may be properly displayed. Thus, the terminal device may properly display the SSID anyway.

In an embodiment, the step S102 may include: broadcasting the generated SSID code and the character encoding form corresponding to the SSID code in the WLAN, such that a terminal device is able to select and display the SSID code corresponding to a local character encoding form according to the broadcasted SSID code and the character encoding form corresponding to the SSID code.

For example, in step S101, the SSID is encoded respectively by utilizing the character encoding form of the Windows system platform and the universal character encoding form, to generate a first SSID code and a second SSID code. Wherein, the first SSID code is suitable for the Windows system platform, and the second SSID code is suitable for the system platform utilizing the universal character encoding form.

In step S102, the first SSID code and the corresponding character encoding form of the Windows system platform, and the second SSID code and the corresponding universal character encoding form are broadcasted in the WLAN. For example, in implementation, a field may be added to a message for broadcasting the SSID code, and the character encoding form corresponding to the SSID code may be added to the additional field.

In this way, after receiving the character encoding form corresponding to the SSID code, the terminal device selects the SSID code corresponding to the local character encoding form to display. For example, if it utilizes the Android system platform, the terminal device selects the second SSID code corresponding to the universal character encoding form to display, rather than displaying the first SSID code. Thus, it may be avoided that the terminal device displays an SSID containing a messy code.

The advantageous effects brought by the technical solutions according to the present embodiment include the following. A set SSID is encoded according to a character encoding form for a variety of preset system platforms, and the generated SSID code is broadcasted in the WLAN. Thus, it may be increased a probability for a terminal device to receive an SSID code which may be properly displayed locally, so as to increase a probability for the terminal device to display a proper SSID.

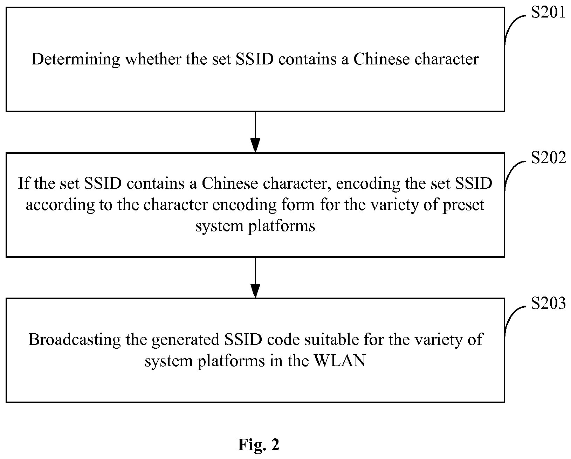

Fig.2 is a flow chart of another method for releasing an SSID in a WLAN according to an exemplary embodiment. As shown in Fig.2, the method for releasing an SSID in a WLAN, which is applied to a communication device such as a router, a wireless access point and a wireless controller, includes the following steps S201-S203.

In step S201, it is determined whether the set SSID contains a Chinese character.

In step S202, when the set SSID contains a Chinese character, the set SSID is encoded according to the character encoding form for the variety of preset system platforms.

In step S203, the generated SSID code suitable for the variety of system platforms is broadcasted in the WLAN.

The illustrative description of the steps S202 and S203 may be referred to the description of the above steps S101 and S102, which will not be repeated herein.

The advantageous effects brought by the technical solutions according to the present embodiment include the following. Since in most cases, the reason for the terminal device producing a messy code in displaying the SSID is that the SSID contains a Chinese character. In the present embodiment, when it is determined that the set SSID contains a Chinese character, the set SSID is encoded according to the character encoding form for the variety of preset system platforms and the generated SSID code suitable for the variety of system platforms is broadcasted in the WLAN. Thus, it may be increased a probability for the terminal device to display a proper SSID, and it may be avoided from broadcasting a plurality of SSID codes if the SSID does not contain a Chinese character, so as to save network resources.

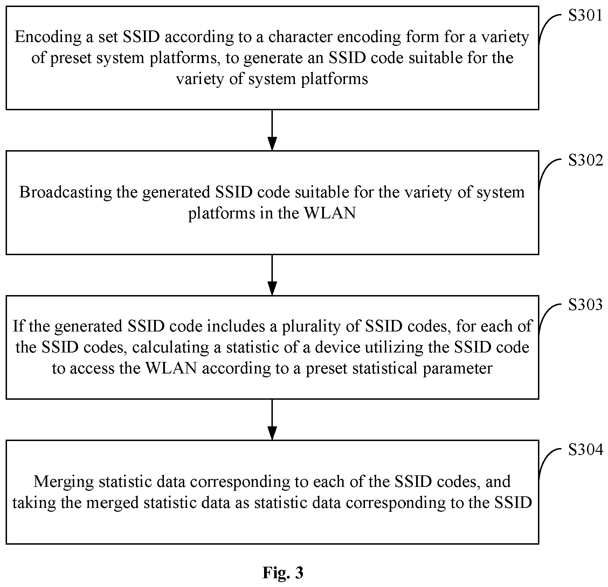

Fig.3 is a flow chart of another method for releasing an SSID in a WLAN according to an exemplary embodiment. As shown in Fig.3, the method for releasing an SSID in a WLAN, which is applied to a communication device such as a router, a wireless access point and a wireless controller, includes the following steps S301-S304.

In step S301, a set SSID is encoded according to a character encoding form for a variety of preset system platforms, to generate an SSID code suitable for the variety of system platforms.

In step S302, the generated SSID code suitable for the variety of system platforms is broadcasted in the WLAN.

The illustrative description of the steps S301 and S302 may be referred to the description of the above steps S101 and S102, which will not be repeated herein.

In step S303, when the generated SSID code includes a plurality of SSID codes, for each of the SSID codes, a statistic of a device utilizing the SSID code to access the WLAN is calculated according to a preset statistical parameter.

Wherein, the preset statistical parameter may include: a number of accessing devices and/or data traffic.

In step S304, statistic data corresponding to each of the SSID codes is merged, and the merged statistic data is taken as statistic data corresponding to the SSID.

For example, in step S301, the SSID is encoded respectively by utilizing a character encoding form of Windows system platform and a universal character encoding form, to generate a first SSID code and a second SSID code. Wherein, the first SSID code is suitable for the Windows system platform, and the second SSID code is suitable for the system platform utilizing the universal character encoding form. In step S303, a number and a data traffic of the devices utilizing the first or second SSID code to access the WLAN are calculated, respectively. In step 304, the numbers of the devices corresponding to the first SSID code and the second SSID code are merged, and the data traffics corresponding to the first SSID code and the second SSID code are merged. In step 304, the merged number of the devices is taken as the number of the devices accessing the network corresponding to the SSID, and the merged data traffic is taken as the data traffic corresponding to the SSID.

The advantageous effects brought by the technical solutions according to the present embodiment include the following. A statistic is calculated respectively for each of the SSID codes, and the statistic data is merged. Thus, it may be acquired accurate statistic data of the sub-network corresponding to the SSID, to facilitate control of the sub-network in subsequent operations by utilizing the statistic data.

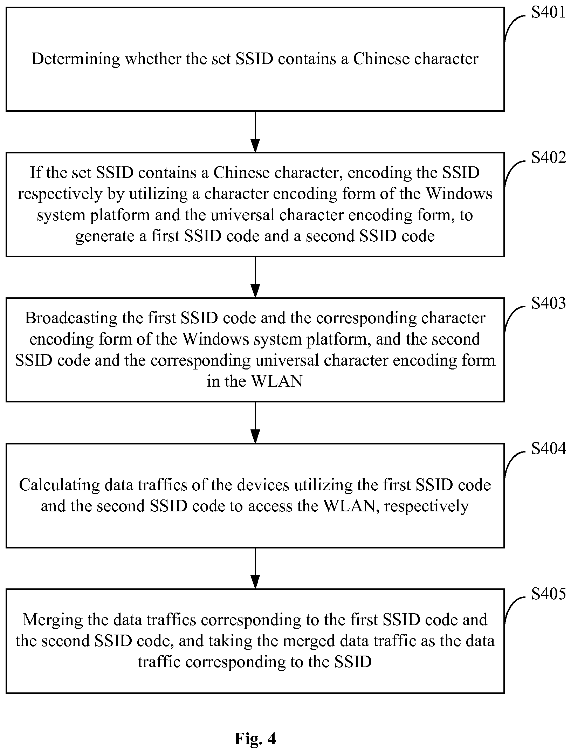

Fig.4 is a flow chart of another method for releasing an SSID in a WLAN according to a first exemplary embodiment. In the first embodiment, the method is applied in the following scenario, a router broadcasts an SSID set by a user in a WLAN, the SSID is " 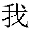 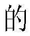 WIFI (My WIFI)", which contains Chinese characters; the variety of preset system platforms include a Windows system platform and a system platform utilizing a universal character encoding form; and the preset statistical parameter is a data traffic. As shown in Fig.4, the method in the first embodiment includes the following steps.

In step S401, it is determined whether the set SSID contains a Chinese character.

For example, it is determined that the SSID " 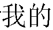 WIFI (My WIFI)" contains Chinese characters.

In step S402, if the set SSID contains a Chinese character, the SSID is encoded respectively by utilizing a character encoding form of the Windows system platform and the universal character encoding form, to generate a first SSID code and a second SSID code.

Wherein, the first SSID code is suitable for the Windows system platform, and the second SSID code is suitable for the system platform utilizing the universal character encoding form.

In step S403, the first SSID code and the corresponding character encoding form of the Windows system platform, and the second SSID code and the corresponding universal character encoding form are broadcasted in the WLAN.

In this way, a terminal device A, which utilizes the Windows system platform, upon receiving the first SSID code and the second SSID code, may select and display the first SSID code which has a same character encoding form as its locally utilized character encoding form. The first SSID code is properly displayed in the terminal device A, without a messy code. A terminal device B, which utilizes the Android system platform, upon receiving the first SSID code and the second SSID code, may select and display the second SSID code which has a same character encoding form same as its locally utilized character encoding form. The second SSID code is properly displayed in the terminal device B, without a messy code.

In step 404, statistic of a data traffic of the devices utilizing the first SSID code and the second SSID code to access the WLAN are respectively calculated.

In step 405, the data traffics corresponding to the first SSID code and the second SSID code are merged, and the merged data traffic is taken as the data traffic corresponding to the SSID.

For example, the terminal device A utilizes the first SSID code to access the WLAN, and the terminal device B utilizes the second SSID code to access the WLAN. The data traffic of the device A is calculated, the data traffic of the device B is calculated, those data traffics of the device A and device B are merged, and the merged data traffic is taken as the data traffic corresponding to the SSID.

The advantageous effects brought by the technical solutions according to the present embodiment include the following. A set SSID is encoded according to a character encoding form for a variety of preset system platforms, and the generated SSID code is broadcasted in the WLAN. Thus, it may be increased a probability for a terminal device to receive an SSID code which may be properly displayed locally, so as to increase a probability for the terminal device to display a proper SSID. In this way, it may be acquired accurate statistic data of the sub-network corresponding to the SSID, to facilitate control of the sub-network in subsequent operations by utilizing the statistic data.

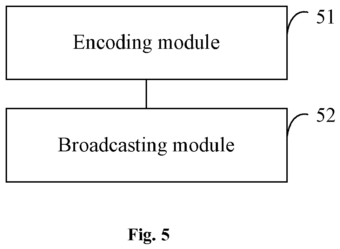

Fig.5 is a block diagram of a device for releasing an SSID in a WLAN according to an exemplary embodiment. As shown in Fig.5, the device for releasing an SSID in a WLAN, which is applied to a communication device such as a router, a wireless access point and a wireless controller, includes:
an encoding module 51, configured to encode a set SSID according to a character encoding form for a variety of preset system platforms, to generate an SSID code suitable for the variety of system platforms; and
a broadcasting module 52, configured to broadcast the generated SSID code suitable for the variety of system platforms in the WLAN.

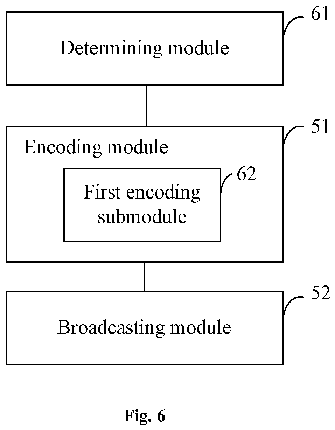

In an embodiment, as shown in Fig.6, the device may further include:
a determining module 61, configured to determine whether the set SSID contains a Chinese character before the set SSID is encoded according to the character encoding form for the variety of preset system platforms by the encoding module 51; and
the encoding module 51 may include:
   a first encoding submodule 62, configured to, if the set SSID contains a Chinese character, encode the set SSID according to the character encoding form for the variety of preset system platforms.

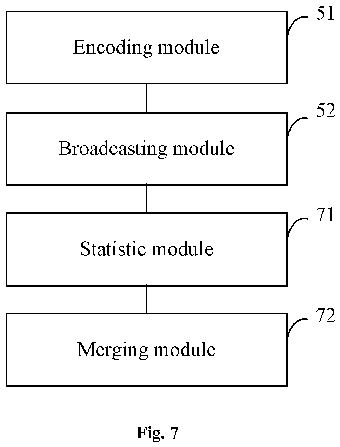

In an embodiment, as shown in Fig.7, the device may further include:
a statistic module 71, configured to, if the generated SSID code includes a plurality of SSID codes, for each of the SSID codes, calculate a statistic of a device utilizing the SSID code to access the WLAN according to a preset statistical parameter; and
a merging module 72, configured to merge statistic data corresponding to each of the SSID codes, and take the merged statistic data as statistic data corresponding to the SSID.

In an embodiment, when the variety of preset system platforms may include a Windows system platform and a system platform utilizing a universal character encoding form, the encoding module may include:
a second encoding submodule, configured to encode the SSID respectively by utilizing a character encoding form of the Windows system platform and the universal character encoding form, to generate a first SSID code and a second SSID code;
wherein, the first SSID code is suitable for the Windows system platform, and the second SSID code is suitable for the system platform utilizing the universal character encoding form.

In an embodiment, the preset statistical parameter includes: a number of accessing devices and/or data traffic.

In an embodiment, the broadcasting module includes:
a broadcasting submodule, configured to broadcast the SSID code and the character encoding form corresponding to the SSID code in the WLAN, such that a terminal device is able to select and display the SSID code corresponding to a local character encoding form according to the broadcasted SSID code and the character encoding form corresponding to the SSID code.

The advantageous effects brought by the technical solutions according to the present embodiment include the following. A set SSID is encoded according to a character encoding form for a variety of preset system platforms, and the generated SSID code is broadcasted in the WLAN. Thus, it may be increased a probability for a terminal device to receive an SSID code which may be properly displayed locally, so as to increase a probability for a terminal device to display a proper SSID.

With respect to the device in the above embodiment, specific operations performed by each module have been described in detail in the embodiments of related method, and detailed description are omitted herein.

A device for releasing an SSID in a WLAN, includes:
a processor; and
a memory for storing instructions executable by the processor;
wherein the processor is configured to perform:
   encoding a set SSID according to a character encoding form for a variety of preset system platforms, to generate an SSID code suitable for the variety of system platforms; and
   broadcasting the generated SSID code suitable for the variety of system platforms in the WLAN.

The processor is configured to perform: prior to the encoding the set SSID according to the character encoding form for the variety of preset system platforms, determining whether the set SSID contains a Chinese character; and if the set SSID contains a Chinese character, encoding the set SSID according to the character encoding form for the variety of preset system platforms.

The processor is configured to perform: if the generated SSID code includes a plurality of SSID codes, for each of the SSID codes, calculating a statistic of a device utilizing the SSID code to access the WLAN according to a preset statistical parameter; and
merging statistic data corresponding to each of the SSID codes, and taking the merged statistic data as statistic data corresponding to the SSID.

The processor is configured to perform: if the variety of preset system platforms include a Windows system platform and a system platform utilizing a universal character encoding form, encoding the SSID respectively by utilizing a character encoding form of the Windows system platform and the universal character encoding form, to generate a first SSID code and a second SSID code; wherein, the first SSID code is suitable for the Windows system platform, and the second SSID code is suitable for the system platform utilizing the universal character encoding form.

The processor is configured to perform: broadcasting the SSID code and the character encoding form corresponding to the SSID code in the WLAN, such that a terminal device is able to select and display the SSID code corresponding to a local character encoding form according to the broadcasted SSID code and the character encoding form corresponding to the SSID code.

A non-transitory computer readable storage medium, when instructions in the storage medium are executed by a processor of a router, the router is enabled to perform a method for releasing an SSID in a WLAN. The method includes:
encoding a set SSID according to a character encoding form for a variety of preset system platforms, to generate an SSID code suitable for the variety of system platforms; and
broadcasting the generated SSID code suitable for the variety of system platforms in the WLAN.

Prior to the encoding the set SSID according to the character encoding form for the variety of preset system platforms, the method may further include:
determining whether the set SSID contains a Chinese character; and
the encoding the set SSID according to the character encoding form for the variety of preset system platforms, may include:
   if the set SSID contains a Chinese character, encoding the set SSID according to the character encoding form for the variety of preset system platforms.

The method may further include: when the generated SSID code includes a plurality of SSID codes, for each of the SSID codes, calculating a statistic of a device utilizing the SSID code to access the WLAN according to a preset statistical parameter; and
merging statistic data corresponding to each of the SSID codes, and taking the merged statistic data as statistic data corresponding to the SSID.

The variety of preset system platforms may include a Windows system platform and a system platform utilizing a universal character encoding form, and the encoding the set SSID according to the character encoding form for the variety of preset system platforms, to generate the SSID code suitable for the variety of system platforms, may include:
encoding the SSID respectively by utilizing a character encoding form of the Windows system platform and the universal character encoding form, to generate a first SSID code and a second SSID code;
wherein, the first SSID code is suitable for the Windows system platform, and the second SSID code is suitable for the system platform utilizing the universal character encoding form.

The preset statistical parameter may include: a number of accessing devices and/or data traffic.

The broadcasting the generated SSID code suitable for the variety of system platforms in the WLAN, may include:
broadcasting the SSID code and the character encoding form corresponding to the SSID code in the WLAN, such that a terminal device is able to select and display the SSID code corresponding to a local character encoding form according to the broadcasted SSID code and the character encoding form corresponding to the SSID code.

## Claims

1. A method for providing a Service Set Identifier, SSID, in a wireless local area network, WLAN, for a variety of terminal devices operating a variety of preset system platforms comprising a system platform using a non-universal character encoding form and a system platform utilizing a universal character encoding form, **characterized in that** the method comprises the following steps performed by a communication device comprising a router or a wireless access point or a wireless controller:
determining (S401) whether the SSID contains a Chinese character;
if the SSID contains a Chinese character;
encoding (S402) the SSID by utilizing the non-universal character encoding form to generate a first SSID code and encoding the SSID by utilizing the universal character encoding form to generate a second SSID code;
broadcasting (S403) in the WLAN the generated first and second SSID codes for the variety of terminal devices operating a variety of system platforms

2. The method according to claim 1, wherein the method further comprises:
for each of the first and second generated SSID codes, calculating (S303) a statistic of a device utilizing the first or second SSID code to access the WLAN according to a preset statistical parameter; and
merging (S304) statistic data corresponding to each of the first and second SSID codes, and taking the merged statistic data as statistic data corresponding to the SSID.

3. The method according to claim 2, wherein the preset statistical parameter comprises: a number of accessing devices and/or data traffic.

4. The method according to claim 1, wherein the step of broadcasting the generated first and second SSID codes suitable for the variety of preset system platforms in the WLAN comprises:
broadcasting the first and second SSID codes and indications of the character encoding form corresponding to the first and second SSID codes in the WLAN, to enable a terminal device to select and display the SSID code corresponding to a local character encoding form utilized by the terminal device.

5. A device for providing a Service Set Identifier SSID in a wireless local area network, WLAN, for a variety terminal devices operating a variety of preset system platforms comprising a system platform using a non-universal character encoding form and a system platform utilizing a universal character encoding form, **characterized in that** the device is operated in a communication device comprising a router or a wireless access point or a wireless controller and comprises; a determining module (61), configured to determine whether the set SSID contains a Chinese character;
an encoding module (51) configured to encode a set SSID by utilizing the non-universal character encoding form to generate a first SSID code and encoding the SSID by utilizing the universal character encoding form to generate a second SSID code; and
a broadcasting module (52) in the WLAN configured to broadcast the generated first and second SSID codes for the variety of terminal devices operating a variety of system platforms
wherein the encoding module comprises a first encoding sub module configured to encode the set SSID if the set SSID contains a Chinese character.

6. The device according to claim 5, wherein the device further comprises:
a statistic module (71), configured to, for each of the first and second generated SSID codes, calculate a statistic of a device utilizing the first or second SSID code to access the WLAN according to a preset statistical parameter; and
a merging module (72), configured to merge statistic data corresponding to each of the first and second SSID codes, and take the merged statistic data as statistic data corresponding to the SSID.

7. The device according to claim 5, wherein the broadcasting module comprises:
a broadcasting submodule, configured to broadcast the first and second SSID codes and indications of the character encoding form corresponding to the first and second SSID codes in the WLAN, to enable a terminal device to
select and display the SSID code corresponding to a local character encoding form utilized by the terminal device.

8. A device for releasing Service Set Identifier SSID in a WLAN, **characterized in that**, the device comprises:
a processor; and
a memory for storing instructions executable by the processor;
wherein the processor is configured to perform the steps defined in the method according to claim 1.

9. A computer program product stored on a computer usable medium, comprising computer-readable program means for causing a communication device to implement the method according to any one of claims 1 to 4.

## Patentansprüche

1. Verfahren zur Bereitstellung eines Service Set Identifier (SSID) in einem drahtlosen lokalen Netzwerk (WLAN) für verschiedene Endgeräte, die verschiedene Systemplattformen betreiben, die eine Systemplattform, die eine nicht universelle Zeichenkodierungsform nutzt, und eine Systemplattform, die eine universelle Zeichenkodierungsform nutzt, aufweisen, **dadurch gekennzeichnet, dass** das Verfahren die folgenden Schritte, die durch eine Kommunikationsvorrichtung durchgeführt werden, die einen Router oder einen drahtlosen Zugangspunkt oder eine drahtlose Steuereinheit aufweist:
Bestimmen (S401), ob die SSID ein chinesisches Zeichen enthält;
falls die SSID ein chinesisches Zeichen enthält:
Kodieren (S402) der SSID durch Nutzen der nicht universellen Zeichenkodierungsform zum Generieren eines ersten SSID-Codes und Kodieren der SSID durch Nutzen der universellen Zeichenkodierungsform zum Generieren eines zweiten SSID-Codes;
Rundsenden (S403) des generierten ersten und zweiten SSID-Codes im WLAN für die verschiedenen Endgeräte, die verschiedene Systemplattformen betreiben.

2. Verfahren nach Anspruch 1, wobei das Verfahren ferner Folgendes aufweist:
für jeden des ersten und zweiten generierten SSID-Code Berechnen (S303) einer Statistik eines Geräts, das den ersten oder zweiten SSID-Code nutzt, um auf das WLAN zuzugreifen, gemäß einem vorgegebenen statistischen Parameter; und
Zusammenfügen (S304) statistischer Daten, die jedem des ersten und des zweiten SSID-Codes entsprechen, und Nehmen der zusammengefügten statistischen Daten als dem SSID entsprechende statistische Daten.

3. Verfahren nach Anspruch 2, wobei der vorgegebene statistische Parameter Folgendes aufweist: eine Anzahl von zugreifenden Geräten und/oder Datenverkehr.

4. Vorrichtung nach Anspruch 1, wobei der Schritt des Rundsendens des für die verschiedenen vorgegebenen Systemplattformen geeigneten generierten ersten und zweiten SSID-Codes im WLAN Folgendes aufweist:
Rundsenden des ersten und des zweiten SSID-Codes und von Hinweisen auf die dem ersten und dem zweiten SSID-Code entsprechende Zeichenkodierungsform im WLAN, um ein Endgerät zum Auswählen und Anzeigen des SSID-Codes entsprechend einer von dem Endgerät genutzten lokalen Zeichenkodierungsform zu befähigen.

5. Vorrichtung zur Bereitstellung eines Service Set Identifier (SSID) in einem drahtlosen lokalen Netzwerk (WLAN) für verschiedene Endgeräte, die verschiedene vorgegebene Systemplattformen betreiben, die eine Systemplattform, die eine nicht universelle Zeichenkodierungsform nutzt, und eine Systemplattform, die eine universelle Zeichenkodierungsform nutzt, aufweisen, **dadurch gekennzeichnet, dass** die Vorrichtung in einer Kommunikationsvorrichtung betrieben wird, die einen Router oder einen drahtlosen Zugangspunkt oder eine drahtlose Steuereinheit aufweist, und Folgendes aufweist:
ein Bestimmungsmodul (61) das konfiguriert ist zum Bestimmen, ob die festgelegte SSID ein chinesisches Zeichen enthält;
ein Kodiermodul (51), das konfiguriert ist zum Kodieren einer festgelegten SSID durch Nutzen der nicht universellen Zeichenkodierungsform zum Generieren eines ersten SSID-Codes und Kodieren der SSID durch Nutzen der universellen Zeichenkodierungsform zum Generieren eines zweiten SSID-Codes;
ein Rundsendemodul (52) im WLAN, das konfiguriert ist zum Rundsenden des generierten ersten und zweiten SSID-Codes für die verschiedenen Endgeräte, die verschiedene Systemplattformen betreiben;
wobei das Kodiermodul ein erstes Kodieruntermodul aufweist, das konfiguriert ist zum Kodieren des festgelegten SSID, falls die festgelegte SSID ein chinesisches Zeichen enthält.

6. Vorrichtung nach Anspruch 5, wobei die Vorrichtung ferner Folgendes aufweist:
ein Statistikmodul (71), das konfiguriert ist zum Berechnen, für jeden des ersten und des zweiten generierten SSID-Codes, einer Statistik einer Vorrichtung, die den ersten oder zweiten SSID-Code nutzt, um auf das WLAN zuzugreifen, gemäß einem vorgegebenen statistischen Parameter; und
ein Zusammenfügungsmodul (72), das konfiguriert ist zum Zusammenfügen statistischer Daten, die jedem des ersten und des zweiten SSID-Codes entsprechen, und Nehmen der zusammengefügten statistischen Daten als dem SSID entsprechende statistische Daten.

7. Vorrichtung nach Anspruch 5, wobei das Rundsendemodul Folgendes aufweist:
ein Rundsendeuntermodul, das konfiguriert ist zum Rundsenden des ersten und des zweiten SSID-Codes und von Hinweisen auf die dem ersten und dem zweiten SSID-Code entsprechende Zeichenkodierungsform im WLAN, um ein Endgerät zum Auswählen und Anzeigen des SSID-Codes entsprechend einer von dem Endgerät genutzten lokalen Zeichenkodierungsform zu befähigen.

8. Vorrichtung zur Freigabe eines Service Set Identifier (SSID) in einem WLAN, **dadurch gekennzeichnet, dass** die Vorrichtung Folgendes aufweist:
einen Prozessor und
einen Speicher zum Speichern von durch den Prozessor ausführbaren Anweisungen;
wobei der Prozessor konfiguriert ist zum Durchführen der im Verfahren nach Anspruch 1 definierten Schritte.

9. Computerprogrammprodukt, in einem rechnernutzbaren Medium gespeichert, das ein rechnerlesbares Programmmittel zum Veranlassen einer Kommunikationsvorrichtung zum Implementieren des Verfahrens nach einem der Ansprüche 1 bis 4 aufweist.

## Revendications

1. Procédé de fourniture d'un identifiant d'ensemble de services, SSID, dans un réseau local sans fil, WLAN, pour une variété de dispositifs terminaux exploitant une variété de plates-formes de système comprenant une plate-forme de service qui utilise une forme de codage de caractères non universels et une plate-forme de service utilisant une forme de codage de caractères universels, **caractérisé en ce que** le procédé comprend les étapes suivantes exécutées par un dispositif de communication comprenant un routeur ou un point d'accès sans fil ou un contrôleur sans fil :
la détermination (S401) que le SSID contient ou non un caractère chinois ;
si le SSID contient un caractère chinois ;
le codage (S402) du SSID en utilisant la forme de codage de caractères non universels pour générer un premier code SSID et le codage du SSID en utilisant la forme de codage de caractères universels pour générer un second SSID code ;
la diffusion (S403) dans le WLAN des premier et second codes SSID générés pour la variété de dispositifs terminaux exploitant une variété de plates-formes de service.

2. Procédé selon la revendication 1, le procédé comprenant en outre :
pour chacun des premier et second codes SSID générés, le calcul (S303) d'une statistique d'un dispositif utilisant le premier ou second code SSID pour accéder au WLAN conformément à un paramètre statistique prédéfini ; et
la fusion (S304) de données statistiques correspondant à chacun des premier et second codes SSID, et l'utilisation des données statistiques fusionnées en tant que données statistiques correspondant au SSID.

3. Procédé selon la revendication 2, dans lequel le paramètre statistique prédéfini comprend : un nombre de dispositifs réalisant un accès et/ou un trafic de données.

4. Procédé selon la revendication 1, dans lequel l'étape de diffusion des premier et second codes SSID générés convenant à la variété de plates-formes de service prédéfinies dans le WLAN comprend :
la diffusion des premier et second codes SSID et d'indications de la forme de codage de caractères correspondant aux premier et second codes SSID dans le WLAN, pour permettre à un dispositif terminal de sélectionner et d'afficher les codes SSID correspondant à une forme de codage de caractères locaux utilisée par le dispositif terminal.

5. Dispositif pour fournir un identifiant d'ensemble de services SSID dans un réseau local sans fil, WLAN, pour une variété de dispositifs terminaux exploitant une variété de plates-formes de système comprenant une plate-forme de service qui utilise une forme de codage de caractères non universels et une plate-forme de service utilisant une forme de codage de caractères universels, **caractérisé en ce que** le dispositif est exploité dans un dispositif de communication comprenant un routeur ou un point d'accès sans fil ou un contrôleur sans fil et comprend :
un moyen de détermination (61), configuré pour déterminer que le SSID défini contient ou non un caractère chinois ;
un module de codage (51) configuré pour coder un SSID défini en utilisant la forme de codage de caractères non universels pour générer un premier code SSID et coder le SSID en utilisant la forme de codage de caractères universels pour générer un second SSID code ; et
un module de diffusion (52) dans le WLAN configuré pour diffuser les premier et second codes SSID générés pour la variété de dispositifs terminaux exploitant une variété de plates-formes de service dans lequel le module de codage comprend un premier sous-module de codage configuré pour coder le SSID défini si le SSID défini contient un caractère chinois.

6. Dispositif selon la revendication 5, le dispositif comprenant en outre :
un module statistique (71), configuré pour, pour chacun des premier et second codes SSID générés, calculer une statistique d'un dispositif utilisant le code SSID pour accéder au WLAN conformément à un paramètre statistique prédéfini ; et
un module de fusion (72), configuré pour fusionner des données statistiques correspondant à chacun des premier et second codes SSID, et utiliser les données statistiques fusionnées en tant que données statistiques correspondant au SSID.

7. Dispositif selon la revendication 5, dans lequel le module de diffusion comprend :
un sous-module de diffusion configuré pour diffuser les premier et second codes SSID et des indications de la forme de codage de caractères correspondant aux premier et second codes SSID dans le WLAN, pour permettre à un dispositif terminal de sélectionner et d'afficher le code SSID correspondant à une forme de codage de caractères locaux utilisée par le dispositif terminal.

8. Dispositif de libération d'un identifiant d'ensemble de services SSID dans un WLAN, **caractérisé en ce que** le dispositif comprend :
un processeur ; et
une mémoire pour mémoriser des instructions exécutables par le processeur ;
dans lequel le processeur est configuré pour exécuter les étapes définies dans le procédé selon la revendication 1.

9. Produit de programme informatique stocké sur un support exploitable par ordinateur, comprenant un moyen de programme lisible par ordinateur pour amener un dispositif de communication à mettre en oeuvre le procédé selon l'une quelconque des revendications 1 à 4.
